# EUROPÄISCHE PATENTSCHRIFT

(11) **EP 1 741 329 B1**
(45) Veröffentlichungstag und Bekanntmachung des Hinweises auf die Patenterteilung: **15.08.2018**
(21) Anmeldenummer: 06007498.6
(22) Anmeldetag: 10.04.2006
(51) Int. Cl.: A01D 41/127, A01B 79/00

(54) **Verfahren und Vorrichtung zur Optimierung von Betriebsparametern einer landwirtschaftlichen Arbeitsmaschine**
Method and apparatus for optimization of the working parameters of an agricultural working machine
Méthode et appareil pour l'optimisation des paramètres de fonctionnement d'une machine de travail agricole

(30) Priorität: 04.07.2005 DE 102005031426
(43) Veröffentlichungstag der Anmeldung: 10.01.2007
(73) Patentinhaber: CLAAS Selbstfahrende Erntemaschinen GmbH, 33428 Harsewinkel (DE)
(72) Erfinder: Fitzner, Werner, 48231 Warendorf (DE); Wippersteg, Heinz-Hermann, 32257 Bünde (DE); Behnke, Willi, 33803 Steinhagen (DE)

(56) Entgegenhaltungen:
- EP-A- 1 403 799
- DE-A1- 10 306 726
- DE-A1- 10 329 932
- DE-A1- 19 514 223
- US-B1- 6 386 128

## Beschreibung

Die vorliegende Erfindung betrifft ein Verfahren und eine Vorrichtung zur Optimierung von Betriebsparametern einer landwirtschaftlichen Arbeitsmaschine gemäß den Oberbegriffen der Ansprüche 1 und 22.

Die Einstellung einer landwirtschaftlichen Arbeitsmaschine ist sehr komplex und weist eine Vielzahl von Maschinenkomponenten mit entsprechenden vom Betreiber einstellbaren Betriebsparametern auf. Diese Betriebsparameter sind bei einem Mähdrescher zum Beispiel die Dreschtrommeldrehzahl, die Gebläsedrehzahl, die Siebweiten vom Unter- und Obersieb, die Haspeldrehzahl, die Fahrgeschwindigkeit etc.

Im Stand der Technik ist eine große Anzahl von Systemen offenbart worden, die den Betreiber einer landwirtschaftlichen Arbeitsmaschine bei der Einstellung optimaler Betriebsparameter unterstützt. Beispielsweise ist aus der DE 103 29 932 A1 ein System bekannt, dass einen schnellen und damit effizienten Optimierungsvorgang von Betriebsparametern ermöglicht, indem durch Abgleich von spezifisch änderbaren Betriebsparametern ein ausgeprägtes Benutzerverhalten aus einer Vielzahl von landwirtschaftlichen Arbeitsmaschinen abgeleitet wird und somit auf optimierte Betriebsparametereinstellungen unter Berücksichtigung der besonderen Erntebedingungen zurückgegriffen werden kann, die bereits in einer Vielzahl von Anwendungsfällen und nicht nur in einem konkreten Einzelfall als optimale Betriebsparametereinstellung bestätigt wurden. Zur Nachnutzung dieses Benutzerverhaltens durch Betreiber anderer landwirtschaftlichen Arbeitsmaschinen werden die ermittelten Betriebsparameter unter Beifügung der inneren und äußeren Randbedingungen in zusammenhängende Datensätze abgespeichert und an ein Datenbanksystem übergeben, wobei das ausgeprägte Benutzerverhalten dann von einer Vielzahl von landwirtschaftlichen Arbeitsmaschinen über eine Eingabe- und Anzeigeneinheit abrufbar ist.

Ein derartiges System hat jedoch den Nachteil, dass das Benutzerverhalten von dem Erfahrungswissen der jeweiligen Betreiber der landwirtschaftlichen Arbeitsmaschinen abhängig und sehr zeitintensiv ist. Die die landwirtschaftlichen Arbeitsmaschinen steuernden Betreiber sind häufig keine Fachleute auf dem jeweiligen Gebiet, so dass sie in der Regel über kein ausgeprägtes oder gar kein Erfahrungswissen verfügen, wodurch es dann immer noch zu falschen Maschineneinstellungen und damit schlechten Arbeitsergebnissen, selbst bei einem ausgeprägten Benutzerverhalten, kommen kann

Um die Qualität des Optimierungsprozesses zu erhöhen, kann der Betreiber neben seinem Erfahrungswissen auf Herstellerempfehlungen beziehungsweise vorwählbare Standardeinstellungen bei der Erstauslieferung der landwirtschaftlichen Arbeitsmaschine und auf sensorgenerierte Maschineninformationen zurückgreifen. Insbesondere bei der Änderung mehrerer Betriebsparameter hängt es aber auch hier maßgeblich vom Erfahrungswissen des Betreibers ab, ob er die eingetretene Wirkung dem richtigen Betriebsparameter zuordnet. Ein derartiges Vorgehen führt in der Praxis dazu, dass der Betreiber sehr viele Maschineneinstellung testen muss, bevor er eine nach seinen Vorstellungen optimale Einstellung der Maschine erreicht hat, wobei die Zahl der Versuche umso höher sein wird, je unerfahrener der Betreiber ist. Zudem hat der Betreiber während dieser Betriebsparameteroptimierung eine Vielzahl von weiteren Informationen zu verarbeiten und erschwerend kommt hinzu, dass von Ernteeinsatz zu Ernteeinsatz jeweils unterschiedliche äußere Erntebedingungen vorliegen

Dafür ist aus der DE 103 06 726 A1 eine Optimierungsmethode bekannt, welche einstellbare Betriebsparameter durch Abarbeitung eines in einem Datenverarbeitungssystem hinterlegten Vorgehensalgorithmus optimiert, wodurch die Optimierung der einstellbaren Betriebsparameter weitestgehend von dem Erfahrungswissen des Betreibers der landwirtschaftlichen Arbeitsmaschine entkoppelt wird. Es verlangt jedoch einen sehr hohen Zeitaufwand bis einzelne Betriebsparametereinstellungen zur optimalen Maschineneinstellung gefunden werden.

Der Erfindung liegt deshalb die Aufgabe zugrunde, ein Verfahren und eine Vorrichtung zur Optimierung von Betriebsparametern einer landwirtschaftlichen Arbeitsmaschine vorzuschlagen, welche die beschriebenen Nachteile des Standes der Technik vermeidet sowie einen schnellen und damit effizienten Optimierungsvorgang zur Findung von optimalen Betriebsparametern einer landwirtschaftlichen Arbeitsmaschine ermöglicht.

Erfindungsgemäß wird die Aufgabe durch ein Verfahren und eine Vorrichtung mit den kennzeichnenden Merkmalen der Ansprüche 1 und 22 gelöst.

Indem das Optimierungskennfeld A in Teilkennfelder A(i) unterteilt wird wobei die Optimierung in den Teilkennfeldern A(i) einzelnen landwirtschaftlichen Arbeitsmaschinen übertragen wird, wird ein Verfahren geschaffen, welches geeignet ist, durch Verteilung der Optimierung der Betriebsparameter auf einzelne landwirtschaftliche Arbeitsmaschinen, die Zeit zur Findung der optimalen Betriebsparameter einer landwirtschaftlichen Arbeitsmaschine erheblich zu verkürzen.

Um möglichst schnell und effizient die einzelnen optimierten Betriebsparameter ermitteln zu können, kann das jeweilige Optimierungskennfeld A eine Kennlinie oder eine Kennlinienschar sein, wobei in vorteilhafter Weise jeder landwirtschaftlichen Arbeitsmaschine wenigstens ein Teilbereich einer Kennlinie als Teilkennfeld A(i) zur Optimierung zugeordnet ist.

Eine vorteilhafte Weiterbildung des erfindungsgemäßen Verfahrens wird dann erreicht, wenn die Optimierung der Betriebsparameter in den Teilkennfeldern A(i) überwacht und ein statistisch optimaler Betriebsparameter ermittelt wird. Dies hat den Vorteil, dass die Findung optimaler Betriebsparameter möglich ist, welche auf einer statistisch abgesicherten Aussage beruhen.

In einer weiteren Ausgestaltung der Erfindung erfolgt die Ermittlung eines neuen statistisch optimalen Betriebsparameters immer dann, wenn durch wenigstens einen Betreiber zumindest ein in den Teilkennfeldern A(i) gewählter Betriebsparameter geändert wird. Dies hat den Vorteil, dass für die Betreiber der landwirtschaftlichen Arbeitsmaschinen ständig aktuelle, den Arbeitsbedingungen angepasste statistisch optimale Betriebsparameter verfügbar sind. Dies trägt gleichfalls zur weiteren Verringerung der Optimierungszeit bei.

Um eine Überreaktion der automatischen Ermittlung der statistisch optimalen Betriebsparameter bei nur geringfügigen oder zeitlich begrenzten Änderungen der in den Teilkennfeldern A(i) gewählten Betriebsparameter zu vermeiden, wird vorzugsweise erst dann ein neuer statistisch optimaler Betriebsparameter ermittelt, wenn der aktuelle vom Betreiber in einem Teilkennfeld A(i) gewählte Betriebsparameter um einen bestimmten Schwellwert und/oder eine bestimmte Zeitspanne vom aktuell gewählten Betriebsparameter abweicht.

Indem die statistisch optimalen Betriebsparameter gleichzeitig für alle miteinander vernetzten Arbeitsmaschinen verfügbar sind, kann ein langes Fahren der einzelnen landwirtschaftlichen Arbeitsmaschinen mit einer schlechten Arbeitsmaschineneinstellungen verhindert und der Vernetzung hinzutretenden landwirtschaftlichen Arbeitsmaschinen zu besseren Starteinstellungen verholfen werden.

Die besonders effiziente Einstellung einer Arbeitsmaschine wird dann erreicht, wenn eine Vielzahl von Arbeitsmaschinen an der Optimierung einer Vielzahl von Optimierungskennfeldern A durch Optimierung der jeweiligen Teilkennfelder A(i) mitwirken. Dies hat insbesondere den Vorteil, dass aufgrund der Vielzahl der ermittelten Werte, Extremwerte, zur Findung fehlerfreierer Arbeitsmaschineneinstellungen, vernachlässigt werden können.

Die Qualität der Optimierung in den einzelnen Teilkennfeldern A(i) kann auch dadurch verbessert werden, dass die Parametereinstellungen zur Optimierung der Teilkennfelder A(i) von in der Bedienung der landwirtschaftlichen Arbeitsmaschine qualifizierten Betreibern vorgenommen werden.

Zur Optimierung der Arbeitsmaschineneinstellung ist es sinnvoll, die Optimierungen in den Teilkennfeldern A(i) in Abhängigkeit von inneren und äußeren Randbedingungen vorzunehmen. Dabei werden vorteilhafter Weise die inneren Randbedingungen von spezifischen Parametern der landwirtschaftlichen Arbeitsmaschine selbst und die äußeren Randbedingungen etwa von witterungsspezifischen, geografischen und emtegutspezifischen Daten gebildet.

Eine besonders vorteilhafte Ausgestaltung der Erfindung ergibt sich dann, wenn die Ermittlung der statistisch optimalen Parameter auch die Ermittlung der Verstelltendenzen der einzelnen Betriebsparameter durch die Betreiber der einzelnen landwirtschaftlichen Arbeitsmaschinen umfasst, so dass die Betreiber der landwirtschaftlichen Arbeitsmaschinen durch Kenntnis der falschen Verstellrichtung gleich in die richtige Richtung, nämlich in Richtung Erhöhung oder Abnahme des jeweiligen Betriebsparameters optimieren können, ohne es zeitintensiv selbst austesten zu müssen.

In vorteilhafter Weiterbildung der Erfindung sind die einzelnen Arbeitsmaschinen wenigstens mittels eines Datenübertragungssystem miteinander vernetzt, so dass mittels permanenten Datenaustauschs zwischen den einzelnen landwirtschaftlichen Arbeitsmaschinen und/oder einer zentralen Datenbank die Findung der statistisch optimalen Betriebsparameter ermöglicht werden kann.

Eine besonders nutzerfreundliche Anwendung ergibt sich dann, wenn der Betreiber einer landwirtschaftlichen Arbeitsmaschine die statistisch optimalen Betriebsparameter in Abhängigkeit von relevanten inneren und äußeren Randbedingungen abrufen kann.

In einer weiteren vorteilhaften Weiterbildung der Erfindung kann die Generierung der statistisch optimalen Betriebsparameter einzelfallabhängig zentral oder dezentral erfolgen. Soll beispielsweise die Optimierung von spezifischen Betriebsparametern zwischen vernetzten landwirtschaftlichen Arbeitsmaschinen erfolgen, die unter im Grunde gleichen oder ähnlichen Arbeitsbedingungen und in räumlicher Nähe zueinander arbeiten, wie dies in sogenannten Maschinenflotten bei landwirtschaftlichen Anwendungsfällen häufig der Fall ist, ist es von Vorteil die Generierung der statistisch optimalen Betriebsparameter auf diesen miteinander vernetzten Maschinenkreis beziehungsweise auf landwirtschaftliche Arbeitsmaschinen, die diesem vernetzten Maschinenkreis hinzutreten, zu beschränken. Vorteilhaft ist dabei insbesondere, dass die in diesem vernetzten Maschinenkreis ermittelten statistisch optimalen Betriebsparameter schon erheblich präziser auf den konkreten Anwendungsfall abgestimmt sind, so dass dadurch die Optimierungszeit der miteinander im Maschinenkreis vernetzten landwirtschaftlichen Arbeitsmaschinen nochmals verringert werden kann. Zudem ermöglicht dies eine bessere Starteinstellung von den diesem Maschinenkreis hinzutretenden landwirtschaftlichen Arbeitsmaschinen.

Eine Verbesserung dieser Nutzerfreundlichkeit kann auch in der Weise erreicht werden, dass die ermittelten statistisch optimalen Betriebsparameter der landwirtschaftlichen Arbeitsmaschine automatisch an den entsprechenden Arbeitsorganen eingestellt werden.

Indem die einzelnen Betreiber eine Bewertung der ihnen zur Verfügung gestellten statistisch optimalen Betriebsparameter in Abhängigkeit zu ihrer gesamten Arbeitsmaschineneinstellung vornehmen und die besten Bewertungen den anderen vernetzten landwirtschaftlichen Arbeitsmaschinen zur Anpassung ihrer Arbeitsmaschineneinstellung zur Verfügung gestellt werden, kann eine noch bessere Optimierung der Arbeitsmaschineneinstellung der einzelnen miteinander vernetzten landwirtschaftlichen Arbeitsmaschinen erreicht werden.

Um die Kosten zum Betreiben des erfindungsgemäßen Verfahrens gering zu halten wird in einer vorteilhaften Weiterbildung der Erfindung vorgeschlagen, an sich bekannte globale und örtlich begrenzte Datenübertragungssysteme wie beispielsweise das Internet, Funknetze, Mobiltelefone oder Speicherkarten zu nutzen.

Eine besonders einfache konstruktive Ausführung einer Vorrichtung zur Durchführung des erfindungsgemäßen Verfahrens ergibt sich dann, wenn die vernetzten landwirtschaftlichen Arbeitsmaschinen zumindest eine Anzeige- und Eingabeeinheit zur Generierung der in den Teilkennfeldern A(i) gewählten Betriebsparameter aufweisen und diese gewählten Betriebsparameter über ein Datenübertagungssystem an eine zentrale Datenbank übergeben werden, wobei die zentrale Datenbank aus diesen gewählten Betriebsparametern für das jeweilige Optimierungskennfeld A den statistisch optimalen Betriebsparameter zur Einstellung der landwirtschaftlichen Arbeitsmaschine generiert, welcher über das Datenübertragungssystem von der Eingabe- und Anzeigeneinheit der vernetzten landwirtschaftlichen Arbeitsmaschinen manuell oder automatisch abrufbar ist.

Weitere vorteilhafte Ausgestaltungen und Weiterbildungen der Erfindung sind Gegenstände der weiteren Unteransprüche.

Anhand der nachfolgenden Zeichnungen wird die Erfindung näher erläutert.

Es zeigen:
- Fig. 1: eine landwirtschaftliche Arbeitsmaschine in Form einer schematischen Seitenansicht eines Mähdreschers
- Fig. 2: drei landwirtschaftliche Arbeitsmaschinen bei der Erntefahrt auf dem Erntefeld sowie ein Optimierungskennfeld A mit drei Kennlinien A1 - A3

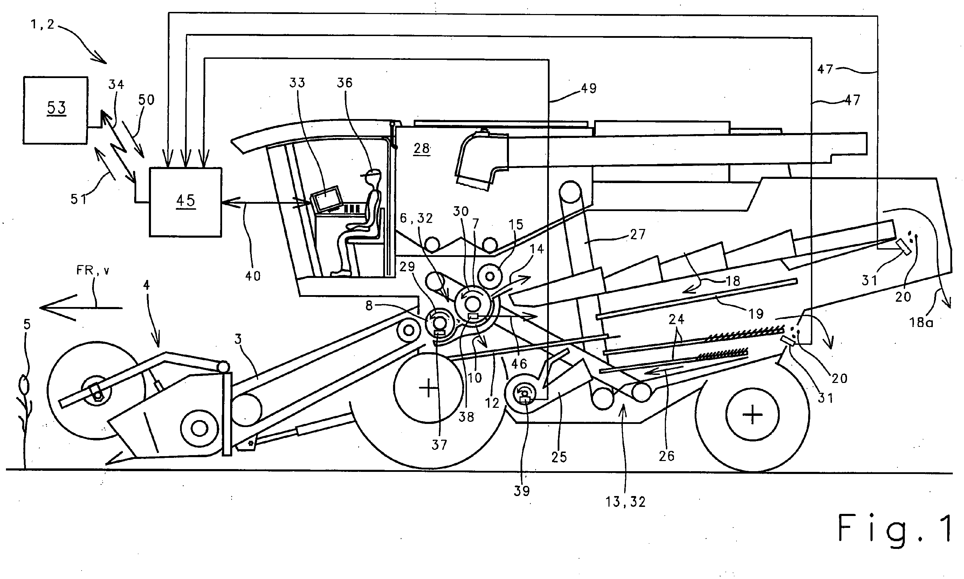

In den Figuren 1 - 2 ist das erfindungsgemäße Verfahren zur Optimierung von Betriebsparametern an einem landwirtschaftlichen Anwendungsfall näher erläutert. Es soll dabei ausdrücklich darauf hingewiesen werden, dass das erfindungsgemäße Verfahren nicht auf die Einstellung der hier genannten Arbeitsorgane und auch nicht auf Mähdrescher beschränkt ist, sondern vielmehr für landwirtschaftliche Arbeitsmaschinen mit einstellbaren Betriebsparametern anwendbar ist.

Figur 1 zeigt eine als Mähdrescher 2 ausgeführte landwirtschaftliche Arbeitsmaschine 1, die in ihrem in Fahrtrichtung FR weisenden frontseitigen Bereich ein an einem Schrägförderorgan 3 angeordnetes Schneidwerk 4 aufnimmt, welches das gewachsene Erntegut 5 aberntet und zusammenführt. Über das Schrägförderorgan 3 gelangt das Erntegut 5 in an sich bekannter Weise in die Dreschorgane 6, die im Ausführungsbeispiel aus einer ersten Dreschtrommel 7 und einer dieser nachgeordneten zweiten Dreschtrommel 8 bestehen. Es liegt im Rahmen der Erfindung, dass die Dreschorgane 6 in an sich bekannter Weise als sogenannte Axial-Dresch- und Trennrotoren ausgebildet sein können. Im Bereich der Dreschorgane 6 wird am Dreschkorb ein erster, im Wesentlichen aus Körner, Kurzstroh und Spreu bestehender Gutstrom 10 abgeschieden, der über einen Vorbereitungsboden 12 in die Reinigungseinrichtung 13 gelangt. Ein weiterer Gutstrom 14 wird im rückwärtigen Bereich der Dreschorgane 6 mittels Wendetrommel 15 an eine als Hordenschüttler ausgeführte Trenneinrichtung übergeben. Auf dem Hordenschüttler wird ein weiterer im Wesentlichen aus Körnern, Stroh und Spreu bestehender Gutstrom 18 über einen Rücklaufboden 19 und den Vorbereitungsboden 12 ebenfalls an die Reinigungseinrichtung 13 übergeben. Zudem tritt am Ende des Hordenschüttlers ein im Wesentlichen aus Stroh und zu einem geringen Anteil aus Körnern, dem sogenannten Kornverlust 20, bestehender Gutstrom 18a aus dem Mähdrescher 2 aus. Durch die Rotationsbewegung 29, 30 der Dreschtrommeln 7, 8 und der ihr nachgeordneten Wendetrommel 15 wird das Erntegut 5 entlang eines Dreschkorbes in den rückwärtigen Bereich der Dreschorgane 6 gefördert. Dabei wird der Erntegutstrom 5 in verschiedene Gutströme 10, 14 aufgeteilt, wobei der durch den Dreschkorb abgeschiedene Gutstrom 10 überwiegend von Körnern und der im rückwärtigen Bereich des Dreschorgans 7 austretende Gutstrom 14 überwiegend von Stroh gebildet wird. Nachdem die aus den Dreschorganen 6 austretenden Gutströme 10, 14 weitere Arbeitsorgane, wie etwa eine aus ein oder mehreren Siebebenen 24 und einem diesen Siebebenen 24 zugeordneten Gebläse 25 bestehende Reinigungseinrichtung 13 sowie eine als Hordenschüttler ausgeführte Trenneinrichtung durchlaufen haben, werden die nun im Wesentlichen von Beimengungen befreiten Körnerströme 26 über ein Förderorgan 27 einer auf dem Mähdrescher 2 angeordneten Speichereinrichtung 28 zugeführt.

Zur Ermittlung des Kornverlustes 20 sind der als Hordenschüttler ausgeführten Trenneinrichtung und der Reinigungseinrichtung 13 jeweils im rückwärtigen Bereich an sich bekannte Kornverlustsensoren 31 zugeordnet. Zudem sei an dieser Stelle darauf verwiesen, dass dem Mähdrescher 2 eine Vielzahl weiterer Sensoren wie etwa Drehzahlsensoren 37, 38 zur Ermittlung der Drehzahl der die Dreschorgane 6 bildenden Dreschtrommeln 7, 8 und zur Ermittlung der Drehzahl des Gebläses 25, zugeordnet sein können.

Im dargestellten Ausführungsbeispiel bilden die Dreschorgane 6, die Trenneinrichtung sowie die Reinigungseinrichtung 13 zugleich die Arbeitsorgane 32 des Mähdreschers 2. Die jeweiligen Aktoren zur Einstellung des Mähdreschers 2 sind dem Fachmann hinreichend bekannt, so dass in Fig. 1 auf die Darstellung des jeweiligen Elements verzichtet werden kann. Zudem ist der Mähdrescher 2 mit einer Eingabe- und Anzeigeneinheit 33 ausgestattet und mittels eines an sich bekannten Datenübertragungssystems 34 wie beispielsweise das Internet, Funknetze, Mobiltelefone oder Speicherkarten mit hier nicht näher dargestellten weiteren landwirtschaftlichen Arbeitsmaschinen 1 und/oder einer zentralen Datenbank 53 vernetzt.

Betreiber 36 derartiger landwirtschaftlicher Arbeitsmaschinen 1 sind bestrebt, den Kornverlust 20 möglichst gering zu halten. In bekannter Weise kann dazu ein Mähdrescher 2 neben Kornverlustsensoren 31 je nach Ausstattungsgrad mit weiteren Sensoren 31, 37, 38 bestückt sein, die im einfachsten Fall wie bereits erwähnt als Drehzahlsensoren 37, 38, 39 zur Ermittlung der Drehzahl des Gebläses 25 sowie der Dreschtrommeln 7, 8 ausgebildet sind. Weiter ist es auch bereits bekannt, sogenannte hier nicht näher beschriebene Durchsatzsensoren einzusetzen. Die von den verschiedenen Sensoren 31, 37, 38 generierten Signale 46, 47, 49 werden in einem auf dem Mähdrescher 2 angeordneten Bordrechner 45 beispielsweise in Dreschtrommeldrehzahlsignale 46, Kornverlustsignale 47 und Gebläsedrehzahlsignale 49 umgewandelt, die dann über eine Eingabe- und Anzeigeneinheit 33 dem Betreiber 36 permanent oder auf Abruf angezeigt werden. Ferner ist es auch bekannt anstelle der Kornverluste 20 mittels der Kornverlustsensoren 31 die Verluste einzelner Arbeitsorgane 32 wie etwa der Reinigungseinrichtung 13 oder der Trenneinrichtung separat zu bestimmen.

Zudem ist es aus dem Stand der Technik bekannt den Bruchkornanteil des nicht näher beschriebenen geernteten Körnerstromes zu ermitteln und dem Betreiber 36 anzuzeigen. Der Bordrechner 45 kann zudem von externen Systemen Informationen 50 empfangen oder Informationen 51 an externe Systeme übermitteln. Gleichfalls ist aus dem Stand der Technik bekannt, durch Abarbeitung eines in einem nicht näher beschriebenen Datenverarbeitungssystem hinterlegten nicht näher beschriebenen Vorgehensalgorithmus unter Eingabe von Zielwertdaten wie zum Beispiel Grenzwerte für den Kornverlust 20 sowie den Körnerbruch, die Optimierung der konkreten Betriebsparameter weitestgehend von dem Erfahrungswissen des Betreibers 36 zu entkoppeln. Bei derartigen Verfahren beschränkt sich einerseits die Optimierung einstellbarer Betriebsparameter darauf, dass der Betreiber 36 einzelne Betriebsparameter der Arbeitsorgane 6,13,17 oder die Fahrgeschwindigkeit v ändert und an Hand der ermittelten Kornverluste 20 oder des Körnerbruchs deren Einfluss auf die Arbeitsqualität der landwirtschaftlichen Arbeitsmaschine 1 abschätzt und bei nicht zufriedenstellenden Ergebnissen, die einstellbaren Betriebsparameter solange ändert, bis ein akzeptables Arbeitsergebnis des Mähdreschers 2 erreicht wird oder andererseits wird betreiberunabhängig unter hohem Zeitaufwand die Optimierung der Betriebsparameter vorgenommen. Hier setzt nun das erfindungsgemäße Verfahren zur Optimierung der Betriebsparameter ein.

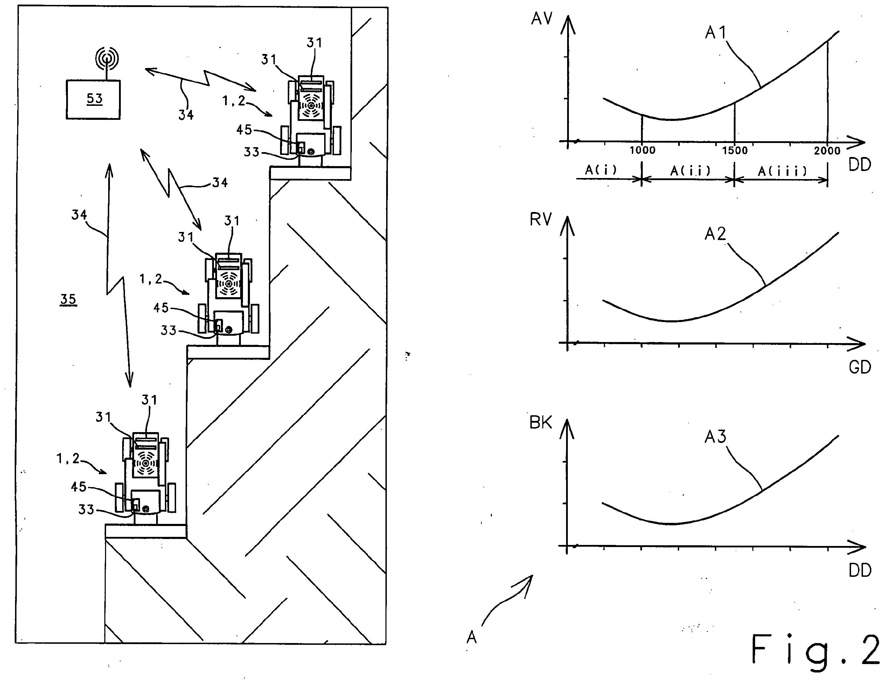

In Fig. 2 sind beispielhaft drei, mit an sich bekannten Kornverlustsensoren 31, zur Ermittlung des Kornverlustes 20, ausgestattete landwirtschaftliche Arbeitsmaschinen 1 in Form von Mähdreschern 2 bei der Erntefahrt auf dem Erntefeld 35 sowie ein von den landwirtschaftlichen Arbeitsmaschinen 1 gemeinsam zu optimierendes Optimierungskennfeld A mit drei Kennlinien A1 - A3 dargestellt. Die einzelnen landwirtschaftlichen Arbeitsmaschinen 1 und eine zentrale Datenbank 53 sind mittels eines Datenübertragungssystems 34, wie beispielsweise das Internet oder Funk, miteinander vernetzt. Gleichfalls verfügen die vernetzen landwirtschaftlichen Arbeitsmaschinen 1 für den Optimierungsprozess über einen Bordrechner 45. Erfindungsgemäß werden den einzelnen einstellbaren Betriebsparametern Optimierungskennfelder A zugeordnet. Das Optimierungskennfeld A besteht im dargestellten Ausführungsbeispiel beispielhaft aus an sich bekannten Kennlinien A1 - A3. In an sich bekannter Weise optimiert jeweils eine der miteinander vernetzten landwirtschaftlichen Arbeitsmaschinen 1 die Arbeitsmaschineneinstellung anhand von jeweils einer der Kennlinien A1 - A3 in Abhängigkeit von an sich bekannten inneren und äußeren Randbedingungen bei jeweils konstantem Erntegutdurchsatz. Daneben verarbeitet der Bordrechner 45 zusätzlich auch Positionsdaten, die beispielsweise ein GPS-Empfänger ermittelt. Dabei optimiert eine vernetzte landwirtschaftliche Arbeitsmaschine 1 ihre Maschineneinstellung anhand der Kornverlust/Dreschtrommeldrehzahl-Kennlinie A1, die zeigt, wie sich der Kornverlust aufgrund unausgedroschener Ähren im Verhältnis zur Dreschtrommeldrehzahl verhält. Eine weitere vernetzte landwirtschaftliche Arbeitsmaschine 1 optimiert ihre Maschineneinstellung anhand der Kornverlust/Gebläsedrehzahl-Kennlinie A2, welche das Verhältnis zwischen Kornverlust in der Reinigungseinrichtung und der Gebläsedrehzahl des der Reinigung zugeordneten Gebläses 25 beschreibt. Anhand der Bruchkorn/Dreschtrommeldrehzahl-Kennlinie A3, welche die Abhängigkeit des Bruchkornanteils von der Dreschtrommeldrehzahl beschreibt, optimiert eine weitere vernetzte landwirtschaftliche Arbeitsmaschine 1 die Drehzahl der Dreschtrommeln 7, 8. Alternativ besteht das Optimierungskennfeld A aus einer Kennlinie A1, wobei im dargestellten Ausführungsbeispiel jeder landwirtschaftlichen Arbeitsmaschine 1 ein Teilbereich der Kornverlust/Dreschtrommeldrehzahl-Kennlinie A1 als Teilkennfeld A(i) - A(iii) zur Optimierung übertragen wird. Beispielhaft besteht der Dreschtrommeldrehzahlbereich aus drei Teilkennfelder, A(i) (Drehzahlbereich von 0-1000 U-min), A(ii) (Drehzahlbereich von 1000-1500 U-min), A(iii) (Drehzahlbereich von 1500-2000 U-min). Dabei übernimmt jeweils eine der miteinander vernetzten landwirtschaftlichen Arbeitsmaschinen 1 in an sich bekannter Weise die Optimierung der Arbeitsmaschineneinstellung in dem ihr zugeordneten Drehzahlbereich. Es liegt im Rahmen der Erfindung, dass auch die weiteren Kennlinien A2, A3 gemäß der Kennlinie A1 in Teilkennfelder A(i) unterteilt sein können.

Die aus den ermittelten Daten für die Teilkennfelder A(i) - A(iii) resultierenden Betriebsparameter werden in der Eingabe- Anzeigeneinheit 33 den Betreibern 36 der landwirtschaftlichen Arbeitsmaschinen 1 angezeigt. Mittels des Datenübertragungssystems 34 steht der Bordrechner 45 der jeweiligen vernetzten landwirtschaftlichen Arbeitsmaschine 1 mit einer zentralen Datenbank 53 und/oder den Bordrechnern 45 der anderen sich im vernetzten Maschinenkreis befindenden landwirtschaftlichen Arbeitsmaschinen 1 im permanenten Datenaustausch 40. Die zentrale Datenbank 53 bekommt die für das jeweilige Teilkennfeld A(i) ermittelten Betriebsparameter über das Datenübertragungssystem 34 übermittelt. Aus den einzelnen für das jeweilige Teilkennfeld A(i) - A(iii) übermittelten optimierten Betriebsparameter generiert die zentrale Datenbank 53 in bekannter Weise statistisch optimale Betriebsparameter für das jeweilige Optimierungskennfeld A, die jeweils zum geringsten Körnerverlust 20 führen und eine erhöhte Fahrgeschwindigkeit v zulassen. Gleichfalls ist denkbar, dass der statistisch optimale Betriebsparameter von einer der miteinander vernetzten landwirtschaftlichen Arbeitsmaschinen 1 mittels einer an sich bekannten Auswerteelektronik ermittelt werden kann. Der statistisch optimale Betriebsparameter steht allen miteinander vernetzen landwirtschaftlichen Arbeitsmaschinen 1 über das Datenübertragungssystem 34 manuell und/oder automatisch abrufbar zur Verfügung. Weiterhin ist vorstellbar, dass der statistisch optimale Betriebsparameter den vernetzten Maschinenkreis hinzutretenden landwirtschaftlichen Arbeitsmaschinen 1 für eine bessere Starteinstellung zur Verfügung steht. Sind hingegen Arbeitsmaschineneinstellung von in einem abgegrenzten regionalen Territorium agierenden landwirtschaftlichen Arbeitsmaschinen 1 zu optimieren, kann die Ermittlung der statistisch optimalen Betriebsparameter auch nur von diesen landwirtschaftlichen Arbeitsmaschinen 1 erfolgen.

Damit eine Überreaktion der automatischen Ermittlung der statistisch optimalen Betriebsparameter bei nur geringfügigen oder zeitlich begrenzten Änderungen der in den jeweiligen Teilkennfeldern A(i) - A(iii) gewählten Betriebsparameter vermieden werden kann, wird erst dann ein neuer statistisch optimaler Betriebsparameter ermittelt, wenn durch wenigstens einen Betreiber 36 ein im jeweiligen Teilkennfeld A(i) - A(iii) gewählter Betriebsparameter geändert wird. Denkbar ist auch, die Ermittlung eines neuen statistisch optimalen Betriebsparameters davon abhängig zu machen, ob der aktuell gewählte statistische Betriebsparameter von einen bestimmten Schwellwert und/oder einer bestimmten Zeitspanne abweicht, welches auch zur Verkürzung des Optimierungsvorganges der einstellbaren Betriebsparameter der jeweiligen landwirtschaftlichen Arbeitsmaschine 1 führt. Damit die für die Optimierungskennfelder A ermittelten statistisch optimalen Betriebsparameter von hoher Qualität sind, verarbeitet die zentrale Datenbank 53 idealerweise nur die für die einzelnen Teilkennfelder A(i) - A(iii) übermittelten optimierten Betriebsparameter, die von in der Bedienung der landwirtschaftlichen Arbeitsmaschine 1 qualifizierten Betreibern 36, generiert wurden. In vorteilhafter Weiterbildung der Erfindung können bei der Beteiligung einer Vielzahl von landwirtschaftlichen Arbeitsmaschinen 1 am Optimierungsprozess die Verstelltendenzen zur Findung der optimalen Betriebsparameter durch die jeweiligen Betreiber 36 ermittelt und den Betreibern 36 der vernetzten landwirtschaftlichen Arbeitsmaschinen 1 mitgeteilt sowie Extremwerte zur Findung fehlerfreierer Arbeitsmaschineneinstellung vernachlässigt werden. Die Möglichkeiten der manuellen und/oder automatischen Umsetzung von den erfindungsgemäß ermittelten statistisch optimalen Betriebsparametern in Aktoren, welche als Steuersignale zur Einstellung von Arbeitsorganen 6, 13, 17 dienen, sind dem Fachmann hinreichend bekannt. Denkbar ist auch, dass die einzelnen Betreiber (36) eine Bewertung der ihnen zur Verfügung gestellten statistisch optimalen Betriebsparameter in Abhängigkeit zu ihrer gesamten Arbeitsmaschineneinstellung vornehmen und die besten Bewertungen den anderen vernetzten landwirtschaftlichen Arbeitsmaschinen (1) zur Anpassung ihrer Arbeitsmaschineneinstellung zur Verfügung gestellt werden.

Es liegt im Rahmen des Könnens des Fachmanns das beschriebene Verfahren zur Optimierung von Betriebsparametern einer landwirtschaftlichen Arbeitsmaschine 1 in nicht dargestellter Weise abzuwandeln oder in anderen als den dargestellten Anwendungsfällen einzusetzen, um die beschriebenen Effekte zu erzielen. Gleichfalls liegt es im Rahmen der Erfindung, anhand von konstanten Betriebsparametern die Fahrgeschwindigkeit v zu optimieren.

**Bezugszeichenliste:**

| | | | |
|---|---|---|---|
| 1 | Landwirtschaftliche Arbeitsmaschine | 33 | Eingabe- und Anzeigeneinheit |
| 2 | Mähdrescher | 34 | Datenübertragungssystem |
| 3 | Schrägförderorgan | 35 | Erntefeld |
| 4 | Schneidwerk | 36 | Betreiber |
| 5 | Erntegut | 37 | Drehzahlsensor |
| 6 | Dreschorgane | 38 | Drehzahlsensor |
| 7 | Erste Dreschtrommel | 39 | Drehzahlsensor |
| 8 | Zweite Dreschtrommel | 40 | Datenaustausch |
| 9 | Dreschkorb | 45 | Bordrechner |
| 10 | Erster Gutstrom | 46 | Dreschtrommeldrehzahlsignale |
| 12 | Vorbereitungsboden | 47 | Kornverlustsignale |
| 13 | Reinigungseinrichtung | 49 | Gebläsedrehzahlsignale |
| 14 | Weiterer Gutstrom | 50 | Informationen |
| 15 | Wendetrommel | 51 | Informationen |
| 16 | Trenneinrichtung | 53 | Zentrale Datenbank |
| 17 | Hordenschüttler | A | Optimierungskennfeld |
| 18 | Gutstrom | A1 | Körnerverlust/Dreschtrommeldrehzahl -Kennlinie |
| 18a | Weiterer Gutstrom | A2 | Körnerverlust/Dreschtrommeldrehzahl -Kennlinie |
| 19 | Rücklaufboden | A3 | Bruchkorn/Dreschtrommeldrehzahl-Kennlinie |
| 20 | Kornverlust | A(i) | Dreschtrommeldrehzahlbereich |
| 24 | Siebebenen | A(ii) | Dreschtrommeldrehzahlbereich |
| 25 | Gebläse | A(iii) | Dreschtrommeldrehzahlbereich |
| 26 | Körnerstrom | FR | Fahrtrichtung |
| 27 | Förderorgan | v | Fahrgeschwindigkeit |
| 28 | Speichereinrichtung | AV | Ausdruschverlust |
| 29 | Rotationsbewegung | DD | Dreschtrommeldrehzahl |
| 30 | Rotationsbewegung | RK | Reinigungskornverlust |
| 31 | Kornverlustsensor | GD | Gebläsedrehzahl |
| 32 | Arbeitsorgane | BK | Bruchkornanteil |

## Patentansprüche

1. Verfahren zur Optimierung von Betriebsparametern einer landwirtschaftlichen Arbeitsmaschine (1) wobei jedem Betriebsparameter in einer Speichereinheit zumindest ein Optimierungskennfeld zugeordnet ist,
**dadurch gekennzeichnet,**
**dass** das Optimierungskennfeld A in Teilkennfelder A(i) unterteilt wird und wobei die Optimierung in den Teilkennfeldern A(i) einzelnen landwirtschaftlichen Arbeitsmaschinen (1) übertragen wird, so dass die Optimierung der Betriebsparameter auf einzelne landwirtschaftliche Arbeitsmaschinen (1) verteilt wird.

2. Verfahren zur Optimierung von Betriebsparametern einer landwirtschaftlichen Arbeitsmaschine (1) nach Anspruch 1,
**dadurch gekennzeichnet,**
**dass** das Optimierungskennfeld A eine Kennlinie sein kann und wobei jeder landwirtschaftlichen Arbeitsmaschine (1) ein Teilbereich der Kennlinie als Teilkennfeld A(i) zur Optimierung übertragen wird.

3. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** das Optimierungskennfeld A eine Kennlinienschar sein kann und wobei jeder landwirtschaftlichen Arbeitsmaschine (1) eine Kennlinie oder Teilbereiche einer Kennlinie als Teilkennfeld A(i) zur Optimierung übertragen wird.

4. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** die Optimierung der Betriebsparameter in den Teilkennfeldern A(i) überwacht wird und ein statistisch optimaler Betriebsparameter ermittelt wird.

5. Verfahren zur Optimierung von Betriebsparametern einer landwirtschaftlichen Arbeitsmaschine (1) nach Anspruch 4,
**dadurch gekennzeichnet,**
**dass** immer dann ein neuer statistisch optimaler Betriebsparameter ermittelt wird, wenn durch wenigstens einen Betreiber (36) ein in den Teilkennfeldern A(i) gewählter Betriebsparameter geändert wird.

6. Verfahren zur Optimierung von Betriebsparametern einer landwirtschaftlichen Arbeitsmaschine (1) nach wenigstens einem der vorhergehenden Ansprüche 4 oder 5, **dadurch gekennzeichnet,**
**dass** die Ermittlung eines neuen statistisch optimalen Betriebsparameters schwellwertabhängig und/oder zeitabhängig vorgenommen wird.

7. Verfahren zur Optimierung von Betriebsparametern einer landwirtschaftlichen Arbeitsmaschine (1) nach wenigstens einem der vorhergehenden Ansprüche 4-6, **dadurch gekennzeichnet,**
**dass** die statistisch optimalen Betriebsparameter der jeweiligen Optimierungskennfelder A für alle miteinander vernetzten landwirtschaftlichen Arbeitsmaschinen (1) verfügbar sind.

8. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** eine Vielzahl von landwirtschaftlichen Arbeitsmaschinen (1) an der Optimierung einer Vielzahl von Optimierungskennfeldern A durch Optimierung der jeweiligen Teilkennfelder A(i) mitwirken.

9. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** die Optimierungen der Teilkennfelder A(i) von in der Bedienung der landwirtschaftlichen Arbeitsmaschinen qualifizierten Betreibern (36) vorgenommen werden.

10. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** die Optimierungen in den Teilkennfeldern A(i) von den Betreibern (36) der landwirtschaftlichen Arbeitsmaschinen (1) in Abhängigkeit von inneren und/oder äußeren Randbedingungen vorgenommen werden.

11. Verfahren zur Optimierung von Betriebsparametern einer landwirtschaftlichen Arbeitsmaschine (1) nach Anspruch 10,
**dadurch gekennzeichnet,**
**dass** die inneren Randbedingungen spezifische Betriebsparameter der landwirtschaftlichen Arbeitsmaschine (1) sein können.

12. Verfahren zur Optimierung von Betriebsparametern einer landwirtschaftlichen Arbeitsmaschine (1) nach wenigstens einem der vorhergehenden Ansprüche 10 oder 11, **dadurch gekennzeichnet,**
**dass** die äußeren Randbedingungen witterungsspezifische Daten, geografische Daten und erntegutspezifische Daten sein können.

13. Verfahren zur Optimierung von Betriebsparametern einer landwirtschaftlichen Arbeitsmaschine (1) nach wenigstens einem der vorhergehenden Ansprüche 4-7, **dadurch gekennzeichnet,**
**dass** die Ermittlung des statistisch optimalen Betriebsparameters für das jeweilige Optimierungskennfeld A auch die Bestimmung der Verstelltendenzen zur Findung der optimalen Betriebsparameter durch die Betreiber (36) der einzelnen landwirtschaftlichen Arbeitsmaschinen (1) umfasst und wobei den Betreibern (36) der einzelnen landwirtschaftlichen Arbeitsmaschinen (1) diese Verstelltendenzen mitgeteilt werden.

14. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** die einzelnen landwirtschaftlichen Arbeitsmaschinen (1) wenigstens mittels eines Datenübertragungssystems (34) miteinander vernetzt sind.

15. Verfahren zur Optimierung von Betriebsparametern einer landwirtschaftlichen Arbeitsmaschine (1) nach wenigstens einem der vorhergehenden Ansprüche 4-7 und 13, **dadurch gekennzeichnet,**
**dass** die statistisch optimalen Betriebsparameter der jeweiligen Optimierungskennfelder A in Abhängigkeit von relevanten inneren und äußeren Randbedingungen abrufbar sind.

16. Verfahren zur Optimierung von Betriebsparametern einer landwirtschaftlichen Arbeitsmaschine (1) nach Anspruch 14 und wenigstens einem der vorhergehenden Ansprüche 4-7, 13 und 15, **dadurch gekennzeichnet,**
**dass** die Generierung der statistisch optimalen Betriebsparameter zentral erfolgt, wobei alle miteinander vernetzten landwirtschaftlichen Arbeitsmaschinen (1) auf diese zentral generierten statistisch optimalen Betriebsparameter zugreifen können.

17. Verfahren zur Optimierung von Betriebsparametern einer landwirtschaftlichen Arbeitsmaschine (1) nach Anspruch 14 und wenigstens einem der vorhergehenden Ansprüche 4-7, 13 und 15, **dadurch gekennzeichnet,**
**dass** die Generierung der statistisch optimalen Betriebsparameter dezentral erfolgt, wobei nur eine Auswahl der miteinander vernetzten landwirtschaftlichen Arbeitsmaschinen (1) auf diese dezentral generierten statistisch optimalen Betriebsparameter zurückgreifen können.

18. Verfahren zur Optimierung von Betriebsparametern einer landwirtschaftlichen Arbeitsmaschine (1) nach wenigstens einem der vorhergehenden Ansprüche 4-7, 13, 15-17, **dadurch gekennzeichnet,**
**dass** aufgrund der Ermittlung der statistisch optimalen Betriebsparameter die Anpassung der Arbeitsmaschineneinstellung durch den Betreiber (36) der landwirtschaftlichen Arbeitsmaschine (1) vorgenommen wird oder dies an der landwirtschaftlichen Arbeitsmaschine (1) selbsttätig erfolgt.

19. Verfahren zur Optimierung von Betriebsparametern einer landwirtschaftlichen Arbeitsmaschine (1) nach wenigstens einem der vorhergehenden Ansprüche 4-7, 13, 15-18, **dadurch gekennzeichnet,**
**dass** der Betreiber (36) die ihm zur Verfügung gestellten statistisch optimalen Betriebsparameter in Abhängigkeit zur gesamten Arbeitsmaschineneinstellung bewertet.

20. Verfahren zur Optimierung von Betriebsparametern einer landwirtschaftlichen Arbeitsmaschine (1) nach wenigstens einem der vorhergehenden Ansprüche, **dadurch gekennzeichnet,**
**dass** aufgrund der durch den Betreiber (36) vorgenommenen Bewertungen eine Anpassung der Arbeitsmaschineneinstellung der anderen vernetzten landwirtschaftlichen Arbeitsmaschine (1) durch den Betreiber (36) vorgenommen wird oder dies an der landwirtschaftlichen Arbeitsmaschine (1) selbsttätig erfolgt.

21. Verfahren zur Optimierung von Betriebsparametern einer landwirtschaftlichen Arbeitsmaschine (1) nach einem der Ansprüche 14 bis 20,
**dadurch gekennzeichnet,**
**dass** das eine oder die mehreren Datenübertragungssysteme (34) globale und/oder örtlich begrenzte Datenübertragungssysteme (34) sind.

22. Vorrichtung zur Durchführung eines Verfahrens zur Optimierung von Betriebsparametern einer landwirtschaftlichen Arbeitsmaschine (1) gemäß einem der Ansprüche 1 bis 21 und wobei jedem Betriebsparameter zumindest ein Optimierungskennfeld zugeordnet ist,
**dadurch gekennzeichnet,**
**dass** die vernetzten landwirtschaftlichen Arbeitsmaschinen (1) zumindest eine Eingabe- und Anzeigeneinheit (33) zur Generierung der in den Teilkennfeldern A(i) optimierten Betriebsparameter aufweisen und diese optimierten Betriebsparameter über ein Datenübertragungssystem (34) an eine zentrale Datenbank (53) übergeben werden und wobei die zentrale Datenbank (53) aus diesen Betriebsparametern für das jeweilige Optimierungskennfeld A einen statistisch optimalen Betriebsparameter generiert welcher über das Datenübertragungssystem (34) von der Eingabe- und Anzeigeneinheit (33) der vernetzten landwirtschaftlichen Arbeitsmaschinen (1) manuell oder automatisch abrufbar ist.

## Claims

1. A method of optimising operating parameters of an agricultural working machine (1), wherein at least one optimisation map is associated with each operating parameter in a memory unit,
**characterised in that**
the optimisation map A is subdivided into sub-maps A(i) and wherein optimisation in the sub-maps A(i) is transmitted to individual agricultural working machines (1) so that optimisation of the operating parameters is distributed to individual agricultural working machines (1).

2. A method of optimising operating parameters of an agricultural working machine (1) according to claim 1
**characterised in that**
the optimisation map A can be a curve and wherein a portion of the curve is transmitted as a sub-map A(i) to each agricultural working machine (1) for optimisation purposes.

3. A method of optimising operating parameters of an agricultural working machine (1) according to at least one of the preceding claims
**characterised in that**
the optimisation map A can be a family of curves and wherein a curve or portions of a curve is transmitted as a sub-map A(i) to each agricultural working machine (1) for optimisation purposes.

4. A method of optimising operating parameters of an agricultural working machine (1) according to at least one of the preceding claims
**characterised in that**
optimisation of the operating parameters is monitored in the sub-maps A(i) and a statistically optimum operating parameter is ascertained.

5. A method of optimising operating parameters of an agricultural working machine (1) according to claim 4
**characterised in that**
a fresh statistically optimum operating parameter is ascertained whenever an operating parameter selected in the sub-maps A(i) is altered by at least one operator(36).

6. A method of optimising operating parameters of an agricultural working machine (1) according to at least one of preceding claims 4 and 5
**characterised in that**
the operation of determining a new statistically optimum operating parameter is effected in threshold value-dependent and/or time-dependent relationship.

7. A method of optimising operating parameters of an agricultural working machine (1) according to at least one of preceding claims 4 to 6
**characterised in that**
the statistically optimum operating parameters of the respective optimisation maps A are available for all networked agricultural working machines (1).

8. A method of optimising operating parameters of an agricultural working machine (1) according to at least one of the preceding claims
**characterised in that**
a plurality of agricultural working machines (1) collaborate in optimising a plurality of optimisation maps A by optimisation of the respective sub-maps A(i).

9. A method of optimising operating parameters of an agricultural working machine (1) according to at least one of the preceding claims
**characterised in that**
optimisations of the sub-maps A(i) are effected by operators (36) who are qualified in the operation of the agricultural working machines.

10. A method of optimising operating parameters of an agricultural working machine (1) according to at least one of the preceding claims
**characterised in that**
optimisations in the sub-maps A(i) are effected by the operators (36) of the agricultural working machines (1) in dependence on internal and/or external boundary conditions.

11. A method of optimising operating parameters of an agricultural working machine (1) according to claim 10
**characterised in that**
the internal boundary conditions can be specific operating parameters of the agricultural working machine (1).

12. A method of optimising operating parameters of an agricultural working machine (1) according to at least one of preceding claims 10 and 11
**characterised in that**
the external boundary conditions can be weather-specific data, geographical data and crop material-specific data.

13. A method of optimising operating parameters of an agricultural working machine (1) according to at least one of preceding claims 4 to 7
**characterised in that**
the operation of ascertaining the statistically optimum operating parameter for the respective optimisation map A also includes determining adjustment trends for finding the optimum operating parameters by the operators (36) of the individual agricultural working machines (1) and wherein said adjustment trends are communicated to the operators (36) of the individual agricultural working machines (1).

14. A method of optimising operating parameters of an agricultural working machine (1) according to at least one of the preceding claims
**characterised in that**
the individual agricultural working machines (1) are networked together at least by means of a data transmission system (34).

15. A method of optimising operating parameters of an agricultural working machine (1) according to at least one of preceding claims 4 to 7 and 13
**characterised in that**
the statistically optimum operating parameters of the respective optimisation maps A can be called up in dependence on relevant internal and external boundary conditions.

16. A method of optimising operating parameters of an agricultural working machine (1) according to claim 14 and at least one of preceding claims 4 to 7, 13 and 15
**characterised in that**
generation of the statistically optimum operating parameters is effected centrally, wherein all networked agricultural working machines (1) can access said centrally generated statistically optimum operating parameters.

17. A method of optimising operating parameters of an agricultural working machine (1) according to claim 14 and at least one of preceding claims 4 to 7, 13 and 15
**characterised in that**
generation of the statistically optimum operating parameters is effected decentrally, wherein only a selection of the networked agricultural working machines (1) can access said decentrally generated statistically optimum operating parameters.

18. A method of optimising operating parameters of an agricultural working machine (1) according to at least one of preceding claims 4 to 7, 13 and 15 to 17
**characterised in that**
adaptation of the working machine setting is effected by the operator (36) of the agricultural working machine (1) on the basis of ascertainment of the statistically optimum operating parameters or same is effected automatically at the agricultural working machine (1).

19. A method of optimising operating parameters of an agricultural working machine (1) according to at least one of preceding claims 4 to 7, 13 and 15 to 18
**characterised in that**
the operator (36) evaluates the statistically optimum operating parameters made available to him in dependence on the overall working machine setting.

20. A method of optimising operating parameters of an agricultural working machine (1) according to at least one of the preceding claims
**characterised in that**
adaptation of the working machine setting of the other networked agricultural working machine (1) is effected by the operator (36) on the basis of the evaluations carried out by the operator (36) or same is effected automatically at the agricultural working machine (1).

21. A method of optimising operating parameters of an agricultural working machine (1) according to one of claims 14 to 20
**characterised in that**
the one or the plurality of data transmission systems (34) are global and/or locally limited data transmission systems (34).

22. Apparatus for carrying out a method of optimising operating parameters of an agricultural working machine (1) according to one of claims 1 to 21 and wherein at least one optimisation map is associated with each operating parameter,
**characterised in that**
the networked agricultural working machines (1) have at least one input and display unit (34) for generating the operating parameters optimized in the sub-maps A(i) and said optimized operating parameters are transmitted to a central database (53) by way of a data transmission system (34) and wherein the central database (53) generates from said operating parameters for the respective optimisation map A a statistically optimum operating parameter which can be retrieved manually or automatically by way of the data transmission system (34) by the input and display unit (33) of the networked agricultural working machines (1).

## Revendications

1. Procédé d'optimisation de paramètres d'exploitation d'une machine de travail agricole (1), à chaque paramètre d'exploitation étant associé au moins un diagramme caractéristique d'optimisation dans une unité de mémoire, **caractérisé en ce que** le diagramme caractéristique d'optimisation A est divisé en diagrammes caractéristiques partiels A(i), et l'optimisation dans les diagrammes caractéristiques partiels A(i) étant transférée à des machines de travail agricoles individuelles (1), de façon que l'optimisation des paramètres d'exploitation soit répartie sur des machines de travail agricoles individuelles (1).

2. Procédé d'optimisation de paramètres d'exploitation d'une machine de travail agricole (1) selon la revendication 1, **caractérisé en ce que** le diagramme caractéristique d'optimisation (A) peut être une courbe caractéristique, et à chaque machine de travail agricole (1) étant transférée une zone partielle de la courbe caractéristique à titre de diagramme caractéristique partiel A(i) en vue d'une optimisation.

3. Procédé d'optimisation de paramètres d'exploitation d'une machine de travail agricole (1) selon au moins une des revendications précédentes, **caractérisé en ce que** le diagramme caractéristique d'optimisation A peut être un ensemble de courbes caractéristiques, et à chaque machine de travail agricole (1) étant transférée une courbe caractéristique ou des zones partielles d'une courbe caractéristique à titre de diagramme caractéristique partiel A(i) en vue d'une optimisation.

4. Procédé d'optimisation de paramètres d'exploitation d'une machine de travail agricole (1) selon au moins une des revendications précédentes, **caractérisé en ce que** l'optimisation des paramètres d'exploitation dans les diagrammes caractéristiques partiels A(i) est surveillée et un paramètre d'exploitation statistiquement optimal est déterminé.

5. Procédé d'optimisation de paramètres d'exploitation d'une machine de travail agricole (1) selon la revendication 4, **caractérisé en ce qu'**un nouveau paramètre d'exploitation statistiquement optimal est toujours déterminé lorsqu'un paramètre d'exploitation sélectionné dans les diagrammes caractéristiques partiels A(i) est modifié par au moins un exploitant (36).

6. Procédé d'optimisation de paramètres d'exploitation d'une machine de travail agricole (1) selon au moins une des revendications précédentes 4 ou 5, **caractérisé en ce que** la détermination d'un nouveau paramètre d'exploitation statistiquement optimal est entreprise en fonction d'une valeur seuil et/ou en fonction du temps.

7. Procédé d'optimisation de paramètres d'exploitation d'une machine de travail agricole (1) selon au moins une des revendications précédentes 4 à 6, **caractérisé en ce que** les paramètres d'exploitation statistiquement optimaux des diagrammes caractéristique d'optimisation A respectifs sont disponibles pour toutes les machines de travail agricoles (1) mises en réseau entre elles.

8. Procédé d'optimisation de paramètres d'exploitation d'une machine de travail agricole (1) selon au moins une des revendications précédentes, **caractérisé en ce qu'**une pluralité de machines de travail agricoles (1) coopèrent à l'optimisation d'une pluralité de diagrammes caractéristiques d'optimisation A par l'optimisation des diagrammes caractéristiques partiels respectifs A(i).

9. Procédé d'optimisation de paramètres d'exploitation d'une machine de travail agricole (1) selon au moins une des revendications précédentes, **caractérisé en ce que** les optimisations des diagrammes caractéristiques partiels A(i) sont entreprises par des exploitants (36) qualifiés dans l'utilisation des machines de travail agricoles.

10. Procédé d'optimisation de paramètres d'exploitation d'une machine de travail agricole (1) selon au moins une des revendications précédentes, **caractérisé en ce que** les optimisations dans les diagrammes caractéristiques partiels A(i) sont entreprises par les exploitants (36) des machines de travail agricoles (1) en fonction de conditions marginales intérieures et/ou extérieures.

11. Procédé d'optimisation de paramètres d'exploitation d'une machine de travail agricole (1) selon la revendication 10, **caractérisé en ce que** les conditions marginales intérieures peuvent être des paramètres d'exploitation spécifiques de la machine de travail agricole (1).

12. Procédé d'optimisation de paramètres d'exploitation d'une machine de travail agricole (1) selon au moins une des revendications précédentes 10 ou 11, **caractérisé en ce que** les conditions marginales extérieures peuvent être des données spécifiques à la météorologie, des données géographiques et des données spécifiques au produit récolté.

13. Procédé d'optimisation de paramètres d'exploitation d'une machine de travail agricole (1) selon au moins une des revendications précédentes 4 à 7, **caractérisé en ce que** la détermination du paramètre d'exploitation statistiquement optimal pour le diagramme caractéristique d'optimisation respectif A englobe aussi la définition des tendances de réglage pour trouver les paramètres d'exploitation optimaux par les exploitants (36) des machines de travail agricoles individuelles (1), et ces tendances de réglage étant communiquées aux exploitants (36) des machines de travail agricoles individuelles (1).

14. Procédé d'optimisation de paramètres d'exploitation d'une machine de travail agricole (1) selon au moins une des revendications précédentes, **caractérisé en ce que** les machines de travail agricoles individuelles (1) sont mises en réseau entre elles au moins au moyen d'un système de transmission de données (34).

15. Procédé d'optimisation de paramètres d'exploitation d'une machine de travail agricole (1) selon au moins une des revendications précédentes 4 à 7 et 13, **caractérisé en ce que** les paramètres d'exploitation statistiquement optimaux des diagrammes caractéristique d'optimisation respectifs A sont consultables en fonction de conditions marginales intérieures et extérieures pertinentes.

16. Procédé d'optimisation de paramètres d'exploitation d'une machine de travail agricole (1) selon la revendication 14 et selon au moins une des revendications précédentes 4 à 7, 13 et 15, **caractérisé en ce que** la génération des paramètres d'exploitation statistiquement optimaux s'effectue centralement, toutes les machines de travail agricoles (1) mises en réseau entre elles pouvant accéder à ces paramètres d'exploitation statistiquement optimaux générés centralement.

17. Procédé d'optimisation de paramètres d'exploitation d'une machine de travail agricole (1) selon la revendication 14 et selon au moins une des revendications précédentes 4 à 7, 13 et 15, **caractérisé en ce que** la génération des paramètres d'exploitation statistiquement optimaux s'effectue de manière décentralisée, seule une sélection des machines de travail agricoles (1) mises en réseau ensemble pouvant accéder à ces paramètres d'exploitation statistiquement optimaux générés de manière décentralisée.

18. Procédé d'optimisation de paramètres d'exploitation d'une machine de travail agricole (1) selon au moins une des revendications précédentes 4 à 7, 13, 15 à 17, **caractérisé en ce qu'**en raison de la détermination des paramètres d'exploitation statistiquement optimaux, l'adaptation du réglage de machine de travail est entreprise par l'exploitant (36) de la machine de travail agricole (1) ou s'effectue automatiquement sur la machine de travail agricole (1).

19. Procédé d'optimisation de paramètres d'exploitation d'une machine de travail agricole (1) selon au moins une des revendications précédentes 4 à 7, 13, 15 à 18, **caractérisé en ce que** l'exploitant (36) analyse les paramètres d'exploitation statistiquement optimaux mis à sa disposition en fonction du réglage global de la machine de travail.

20. Procédé d'optimisation de paramètres d'exploitation d'une machine de travail agricole (1) selon au moins une des revendications précédentes, **caractérisé en ce que**, sur la base des analyses entreprises par l'exploitant (36), une adaptation du réglage de machine de travail de l'autre machine de travail agricole (1) est entreprise par l'exploitant (36) ou s'effectue automatiquement sur la machine de travail agricole (1).

21. Procédé d'optimisation de paramètres d'exploitation d'une machine de travail agricole (1) selon une des revendications 14 à 20, **caractérisé en ce que** le ou les systèmes de transmission de données (34) sont des systèmes de transmission de données planétaires et/ou limités localement (34).

22. Dispositif pour la mise en oeuvre d'un procédé d'optimisation de paramètres d'exploitation d'une machine de travail agricole (1) selon une des revendications 1 à 21, et à chaque paramètre d'exploitation étant associé au moins un diagramme caractéristique d'optimisation, **caractérisé en ce que** les machines de travail agricoles mises en réseau (1) comportent au moins une unité d'entrée et d'affichage (33) pour générer les paramètres d'exploitation optimisés dans les diagrammes caractéristiques partiels A(i), et ces paramètres d'exploitation optimisés sont transférés par l'intermédiaire d'un système de transmission de données (34) à une banque de données centrale (53) et, à partir de ces paramètres d'exploitation, la banque de données centrale (53) génère pour le diagramme caractéristique d'optimisation respectif A un paramètre d'exploitation statistiquement optimal, lequel est consultable manuellement ou automatiquement par l'unité d'entrée et d'affichage (33) des machines de travail agricoles mises en réseau (1) par l'intermédiaire du système de transmission de données (34).
